# EUROPÄISCHE PATENTSCHRIFT

(11) **EP 4 323 261 B1**
(45) Veröffentlichungstag und Bekanntmachung des Hinweises auf die Patenterteilung: **11.06.2025**
(21) Anmeldenummer: 22717208.7
(22) Anmeldetag: 07.04.2022
(51) Int. Cl.: B62D 53/08

(54) **ZUGSATTELZAPFEN FÜR EINEN SATTELAUFLIEGER EINES SATTELKRAFTFAHRZEUGS**
FIFTH-WHEEL KINGPIN FOR A SEMITRAILER OF A TRACTOR-TRAILER
PIVOT D'ATTELAGE DE SELLETTE POUR LA SEMI-REMORQUE D'UN CAMION SEMI-REMORQUE

(30) Priorität: 12.04.2021 DE 102021109064
(43) Veröffentlichungstag der Anmeldung: 21.02.2024
(73) Patentinhaber: Rühlicke GmbH, 30179 Hannover (DE)
(72) Erfinder: RÜHLICKE, Stefan, 30175 Hannover (DE)
(74) Vertreter: Holz, Christian
(86) Internationale Anmeldenummer: PCT/EP2022/059216
(87) Internationale Veröffentlichungsnummer: WO 2022/218798

(56) Entgegenhaltungen:
- EP-A1- 2 899 101
- DE-A1- 19 647 211
- DE-U1- 202007 014 589
- US-A1- 2019 225 286

## Beschreibung

Die vorliegende Erfindung betrifft einen Zugsattelzapfen für einen Sattelauflieger eines Sattelkraftfahrzeugs gemäß dem Oberbegriff des Patentanspruchs 1, einen Sattelauflieger mit einem derartigen Zugsattelzapfen gemäß dem Patentanspruch 14 sowie ein Sattelkraftfahrzeug mit einem derartigen Sattelauflieger gemäß dem Patentanspruch 15.

Zum Transport von Gütern werden heutzutage verschiedene Arten von Kraftfahrzeugen als Straßenfahrzeuge verwendet. Hierzu gehören auch die Sattelkraftfahrzeuge, welche umgangssprachlich auch als Sattelzüge bezeichnet werden.

Ein Sattelkraftfahrzeug ist ein Gespann aus einer Sattelzugmaschine, welche auch als Sattelschlepper bezeichnet werden kann, und aus einem Sattelauflieger, welcher auch als Sattelanhänger, als Auflieger oder als Trailer bezeichnet werden kann. Bei der Sattelzugmaschine handelt es sich um einen verkürzten Lastkraftwagen ohne Ladefläche, dessen Rahmen, Fahrgestell bzw. Chassis stattdessen eine Sattelkupplung zur Aufnahme einer korrespondierenden Befestigung des Sattelaufliegers aufweist. Der Sattelauflieger ist ein vergleichsweise langer Anhänger ohne vordere Achse, welcher mit seinem vorderen Bereich, in Fahrtrichtung betrachtet, von oben auf der Sattelkupplung des Rahmens der Sattelzugmaschine aufliegt und von der Sattelkupplung drehbeweglich gehalten wird. Die drehbewegliche Verbindung zwischen Sattelzugmaschine und Sattelauflieger wird durch einen Bolzen - Zugsattelzapfen, Königsbolzen oder Königszapfen genannt - als Befestigung des Sattelaufliegers ermöglicht, welcher von der Sattelkupplung gehalten wird. Der zylindrische und rotationssymmetrische Zugsattelzapfen ist hierzu im vorderen Bereich des Rahmens feststehend und nach unten zeigend angeordnet. Das Sattelkraftfahrzeug kann auch als Fahrzeugverbund bezeichnet werden. Die Sattelzugmaschine kann auch als in Zug-, Fahrt- oder Bewegungsrichtung vorderes Fahrzeug und der Sattelauflieger auch als in Zug-, Fahrt- oder Bewegungsrichtung hinteres Fahrzeug des Fahrzeugverbundes bezeichnet werden.

Zum Ankoppeln bzw. zum Aufsatteln des Sattelaufliegers an die Sattelzugmaschine wird die Sattelkupplung nach hinten zeigend geöffnet und die Sattelzugmaschine fährt rückwärts an den auf Sattelstützen aufgestellten Sattelanhänger heran, sodass sich der Rahmen der Sattelzugmaschine mit der Sattelkupplung unter den vorderen Bereich des Rahmens des Sattelaufliegers schiebt und der Zugsattelzapfen durch die Öffnung der Sattelkupplung in dessen Innenraum gelangt. Dann hält die Sattelzugmaschine an und die Öffnung der Sattelkupplung wird geschlossen und verriegelt. Das Gespann ist fahrbereit. Das Abkuppeln bzw. das Absatteln erfolgt umgekehrt.

Der feststehende Zugsattelzapfen des Sattelaufliegers ermöglicht somit nicht nur einen formschlüssigen Halt gegenüber der geschlossen Sattelkupplung der Sattelzugmaschine entgegen der Fahrt- bzw. Zugrichtung, sondern auch eine rotatorische Relativbewegung zwischen Sattelauflieger und Sattelzugmaschine, so dass der Sattelauflieger der Bewegung der Sattelzugmaschine auch bei Kurvenfahrten folgen kann. Über die drehbewegliche Verbindung zwischen Sattelkupplung der Sattelzugmaschine und Zugsattelzapfen des Sattelaufliegers hinweg kann ferner eine elektrische sowie hydraulische Versorgung des Sattelaufliegers seitens der Sattelzugmaschine erfolgen, wie beispielsweise in der DE 20 2007 014 589 U1 beschrieben.

Durch diese Relativbewegungen des Zugsattelzapfens und der Sattelkupplung zueinander kommt es im Laufe des Betriebes des Sattelkraftfahrzeugs zu einem Abrieb des Materials wenigstens des Zugsattelzapfens dort, wo der Zugsattelzapfen mit der Sattelkupplung in Kontakt kommt bzw. an der Sattelkupplung reibt. Dieser Abrieb bzw. dieser Verschleiß des Zugsattelzapfens reduziert dessen Materialstärke und schwächt somit den Zugsattelzapfen als Übertragungselement im Kraftfluss zwischen Sattelzugmaschine und Sattelauflieger. Dies kann zu einem Abriss des Zugsattelzapfens führen.

Daher ist es für die Verkehrssicherheit eines Sattelkraftfahrzeugs erforderlich, regelmäßig, wie zum Beispiel in bestimmten Zeitabständen wie zum Beispiel halbjährig oder in Abhängigkeit der Benutzung des Sattelkraftfahrzeugs zum Beispiel in Abhängigkeit der gefahrenen Kilometer, den Zugsattelzapfen auf Verschleiß zu kontrollieren. Dies erfolgt bisher manuell, d. h. durch eine Person, welche mittels einer mechanischen Prüflehre bzw. Schablone die Maße des Zugsattelzapfens an bestimmten vorgegebenen Stellen misst um festzustellen, ob die gemessenen Maße die entsprechenden Vorgaben noch erfüllen oder nicht, d. h. der Zugsattelzapfen bereits übermäßig stark verschlissen ist und ausgetauscht werden muss oder noch nicht.

Nachteilig hieran ist, dass die Beurteilung eines zulässigen oder unzulässigen Verschleißes des Zugsattelzapfens der jeweiligen Person überlassen wird und somit eine gewisse Unsicherheit dahingehend besteht, dass die Beurteilung auch von der Aufmerksamkeit und bzw. oder von der Erfahrung der Person abhängen kann. Dies kann dazu führen, dass ein unzulässig stark verschlissener Zugsattelzapfen weiterhin verwendet wird, was die Verkehrssicherheit des Sattelkraftfahrzeugs gefährden kann. Dies kann ebenso dazu führen, dass ein noch verwendbarer Zugsattelzapfen vorzeitig ausgetauscht wird, was zusätzlichen Aufwand, zusätzliche Kosten und bzw. oder einen unnötigen Ausfall des Sattelkraftfahrzeugs verursachen kann.

Nachteilig ist hieran auch, dass der Verschleiß des Zugsattelzapfens sehr unterschiedlich auftreten kann und somit innerhalb des zulässigen Zeit- bzw. Kilometerintervalls zwischen zwei Verschleißprüfungen bereits ein unzulässig hoher Verschleiß erreicht werden kann, ohne dass dies in diesem Moment festgestellt werden kann. Dies kann ebenfalls die Verkehrssicherheit des Sattelkraftfahrzeugs gefährden.

Eine Aufgabe der vorliegenden Erfindung ist es, einen Zugsattelzapfen für einen Sattelauflieger eines Sattelkraftfahrzeugs der eingangs beschriebenen Art bereit zu stellen, sodass die Überprüfung des Verschleißes des Zugsattelzapfens vereinfacht und bzw. oder verbessert werden kann. Insbesondere soll der Verschleiß des Zugsattelzapfens regelmäßiger als bisher und insbesondere sogar fortlaufend überwacht werden können. Dies soll insbesondere möglichst einfach, verlässlich, bauraumsparend, personenunabhängig und bzw. oder selbststätig erfolgen können. In jedem Fall soll hierdurch insbesondere die Verkehrssicherheit des Sattelkraftfahrzeugs verbessert bzw. erhöht werden. Zumindest soll eine Alternative zu bekannten Möglichkeiten zur Überprüfung des Verschleißes des Zugsattelzapfens geschaffen werden.

Die Aufgabe wird erfindungsgemäß durch ein Zugsattelzapfen mit den Merkmalen des Patentanspruchs 1, durch einen Sattelauflieger mit den Merkmalen des Patentanspruchs 14 sowie durch ein Sattelkraftfahrzeug mit den Merkmalen des Patentanspruchs 15 gelöst. Vorteilhafte Weiterbildungen sind in den Unteransprüchen beschrieben.

Somit betrifft die vorliegende Erfindung einen Zugsattelzapfen für einen Sattelauflieger eines Sattelkraftfahrzeugs, welcher sich im Wesentlichen entlang einer Längsachse erstreckt. Der Zugsattelzapfen stellt dabei, wie eingangs beschrieben, einen bolzenartigen, rotationssymmetrischen und üblicherweise metallischen Vorsprung dar, welcher sich von der Unterseite des Fahrgestells in der vertikalen Richtung senkrecht nach unten erstreckt. Die Längsachse des Zugsattelzapfens als dessen Achse der Rotationssymmetrie fällt dabei bei der Verwendung an einem Sattelauflieger mit der Achse der vertikalen Richtung in kartesischen Koordinaten, d.h. mit der Richtung der Schwerkraft, zusammen, welche sich senkrecht zur horizontalen Ebene erstreckt.

Der erfindungsgemäße Zugsattelzapfen ist gekennzeichnet durch wenigstens ein Verschleißdetektionsmittel, welches senkrecht zur Längsachse ausgerichtet derart im Zugsattelzapfen angeordnet ist, sodass ein Verschleiß des Zugsattelzapfens senkrecht zur Längsachse optisch und bzw. oder sensorisch erkannt werden kann. Mit anderen Worten ist innerhalb der Kontur bzw. innerhalb des Materials des Zugsattelzapfens ein Verschleißdetektionsmittel derart angeordnet, sodass sowohl das Material des Zugsattelzapfens als auch das Material des Verschleißdetektionsmittels durch den Abrieb bzw. durch den Verschleiß, welcher im Betrieb wie eingangs beschrieben seitens des Zugsattelzapfes auftritt, in ihrer radialen Erstreckung reduziert werden.

Hierzu kann das wenigstens eine Verschleißdetektionsmittel genau radial bzw. senkrecht zur Längsachse oder zumindest derart schräg zur Längsachse im Zugsattelzapfen angeordnet sein, sodass der Abrieb bzw. der Verschleiß auch das Verschleißdetektionsmittel von außen reduzieren kann.

Der vorliegenden Erfindung liegt dabei die Erkenntnis zugrunde, dass durch die Ausbildung eines Teils des Zugsattelzapfens als bzw. mit einem Verschleißdetektionsmittel das Maß des Abriebs bzw. des Verschleißes des Zugsattelzapfens an dieser Stelle von außen optisch erkennbar und bzw. oder sensorisch erfassbar gemacht werden kann. In jedem Fall kann der Zustand des Verschleißdetektionsmittels auf diese Art und Weise einfacher erkannt bzw. überwacht werden als dies bisher durch regelmäßige manuelle Kontrollen des Zugsattelzapfens selbst wie eingangs beschrieben möglich ist. Dies kann den Aufwand und damit auch die Kosten der Kontrolle des Maßes des Verschleißes des Zugsattelzapfens reduzieren. Dies kann auch die Verlässlichkeit des Ergebnisses der Kontrolle erhöhen, was zum einen die Verkehrssicherheit des Sattelkraftfahrzeugs erhöhen und zum anderen einen vorzeitigen bzw. unnötigen Austausch eines noch verwendbaren Zugsattelzapfens vermeiden kann. Dabei das Verschleißdetektionsmittel innerhalb des Zugsattelzapfens anzuordnen kann den Aufwand der Umsetzung und insbesondere den hierfür erforderlichen Bauraum geringhalten. Insbesondere kann eine durchgängige bzw. deutlich regelmäßigere Kontrolle bzw. Überwachung des Maßes des Verschleißes des Zugsattelzapfens als bisher bekannt erfolgen, was die Verkehrssicherheit des Sattelkraftfahrzeugs sowie die Dauer der Verwendung eines Zugsattelzapfens erhöhen kann.

Vorzugswiese ist das Verschleißdetektionsmittel in wenigstens einem Horizontalhohlraum des Zugsattelzapfens angeordnet, wobei das Verschleißdetektionsmittel wenigstens ein erstes Verschleißelement einer ersten Farbe aufweist, welches zwischen dem äußeren Rand des Horizontalhohlraums und einer Verschleißgrenze angeordnet ist. Die erste Farbe des Verschleißelements unterscheidet sich signifikant von der Farbe des Materials des Zugsattelzapfens selbst. Mit anderen Worten kann als Verschleißdetektionsmittel wenigstens ein farbiges Verschleißelement, insbesondere aus einem farbigen Kunststoff, verwendet werden, welches in einen entsprechenden Hohlraum des Zugsattelzapfens eingebracht sein kann und nach außen hin mit der Kontur bzw. Oberfläche des Zugsattelzapfens abschließt und von einer Person optisch erkannt werden kann. Ist das farbige Verschleißelement noch nicht vollständig abgerieben, so kann das farbige Verschleißelement von der Person optisch erkannt und hieraus auf einen zulässigen Verschleiß des Zugsattelzapfens geschlossen werden. Ist das farbige Verschleißelement für die Person nicht mehr optisch erkennbar, so kann die Person hieraus schließen, dass das farbige Verschleißelement vollständig abgerieben und somit die Grenze des zulässigen Verschleißes erreicht oder überschritten ist. Dies kann eine besonders einfache Umsetzung der vorliegenden Erfindung darstellen, welche einer Person eine regelmäßige optische Kontrolle des Verschleißes erlauben kann. Insbesondere kann der Kraftfahrer der Sattelzugmaschine, welcher einen fremden bzw. unbekannten Sattelauflieger mit einem erfindungsgemäßen Zugsattelzapfen ankoppeln soll, einfach und schnell selbst den Verschleißzustand des Zugsattelzapfens des Sattelaufliegers optisch kontrollieren. Dies kann das Vertrauen des Kraftfahrers in die Beförderung des fremden bzw. unbekannten Sattelaufliegers erhöhen.

Das Verschleißdetektionsmittel kann auch wenigstens zwei unterschiedlich farbige Verschleißelemente aufweisen, welcher radial hintereinander abgeordnet ist, um die Aussagefähigkeit zu erhöhen, wie weiter unten näher beschrieben werden wird.

Alternativ oder zusätzlich kann das Verschleißdetektionsmittel eine elektronische Überwachung des Verschleißzustand bzw. der Verschleißgrenze des Zugsattelzapfens ermöglichen, wie weiter unter näher beschrieben werden wird.

In jedem Fall kann das Verschleißdetektionsmittel in der horizontalen Ebene bzw. im Querschnitt des Zugsattelzapfens betrachtet an einer Stelle angeordnet sein, an welcher üblicherweise ein besonders signifikanter Abrieb bzw. Verschleiß auftritt bzw. an welcher üblicherweise zuerst das Erreichen eines unzulässig hohen Verschleißes zu erwarten ist. Dies kann die Aussagefähigkeit des Verschleißdetektionsmittels entsprechend erhöhen.

Es können auch, in der horizontalen Ebene bzw. im Querschnitt des Zugsattelzapfens betrachtet, mehrere gleiche oder unterschiedliche Verschleißdetektionsmittel verwendet werden, um die zuvor beschriebene Kontrolle des Verschleißes an entsprechend vielen Stellen des Zugsattelzapfens umsetzen zu können. Hierdurch können insbesondere mehrere Stellen, welche üblicherweise einem signifikanten Verschleiß unterliegen, gleichzeitig wie zuvor beschrieben auf Verschleiß überwacht werden. In diesem Fall kann beispielsweise wenigstens ein sensorisches Verschleißdetektionsmittel an einer Stelle des Zugsattelzapfens angewendet werden, welche für die Person bzw. für den Kraftfahrer optisch schlecht bis gar nicht zu erfassen ist. Wenigstens ein optisches Verschleißdetektionsmittel kann an einer Stelle des Zugsattelzapfens angewendet werden, welche für die Person bzw. für den Kraftfahrer gut bzw. einfach optisch zu erfassen ist.

Mehrere gleiche oder unterschiedliche Verschleißdetektionsmittel können auch in der vertikalen Richtung, d.h. entlang der Längsachse, versetzt zueinander angeordnet werden, um unterschiedliche Abschnitte des Zugsattelzapfens und bzw. oder mehrere Stellen eines Abschnitts des Zugsattelzapfens wie zuvor beschrieben zu überwachen, wie im Folgenden noch näher beschrieben werden wird. Auch hierdurch kann die Aussagefähigkeit der Verschleißdetektionsmittel entsprechend erhöht werden.

Gemäß einem Aspekt der Erfindung ist das Verschleißdetektionsmittel in wenigstens einem Horizontalhohlraum des Zugsattelzapfens angeordnet, wobei das Verschleißdetektionsmittel wenigstens ein erstes Verschleißelement einer ersten Farbe, welches zwischen dem äußeren Rand des Horizontalhohlraums und einer Verschleißgrenze angeordnet ist, und wenigstens ein zweites Verschleißelement einer zweiten, unterschiedlichen Farbe aufweist, welches innerhalb der Verschleißgrenze angeordnet ist. Auf diese Art und Weise kann die erste Farbe des ersten Verschleißelements von der Person bzw. von dem Kraftfahrer erkannt und auf einen zulässigen Verschleiß des Zugsattelzapfens geschlossen werden. Wird von der Person bzw. vom Kraftfahrer die zweite Farbe des zweiten Verschleißelements optisch erkannt, so kann hierdurch auf einen unzulässigen Verschleiß des Zugsattelzapfens geschlossen werden.

Somit kann, als Weiterentwicklung des zuvor beschriebenen lediglich einen farbigen Verschleißelements, aus der optisch erkannten zweiten Farbe des zweiten Verschleißelements darauf geschlossen werden, dass das zweite Verschleißelement weiterhin vorhanden ist. Würde lediglich ein erstes farbiges Verschleißelement verwendet werden, so könnte dessen Abwesenheit sowohl durch das Erreichen der zulässigen Verschleißgrenze als auch dadurch begründet sein, dass sich das einfarbige Verschleißelement gelöst hat und aus dem Zugsattelzapfen herausgefallen ist. In diesem Fall würde ein noch verwendbarer Zugsattelzapfen als verschlissen bewertet und unnötigerweise ausgetauscht werden. Dies kann durch diesen Aspekt der Erfindung vermieden werden.

Gemäß einem weiteren Aspekt der Erfindung weist das Verschleißdetektionsmittel wenigstens ein Leuchtmittel auf, welches innerhalb des Horizontalhohlraums und bzw. oder innerhalb eines Vertikalhohlraums des Zugsattelzapfens angeordnet und ausgebildet ist, das erste Verschleißelement durch das zweite Verschleißelement hierdurch zu durchleuchten. Das Leuchtmittel kann insbesondere als LED umgesetzt werden. Der Betrieb des Leuchtmittels kann insbesondere dauerhaft bzw. durchgängig erfolgen, um jederzeit den Verschleißzustand des Zugsattelzapfens kontrollieren zu können. Ferner kann ein entsprechender Aufwand, das Leuchtmittel einzuschalten und auszuschalten bzw. hierfür entsprechende elektrische Möglichkeiten wie zum Beispiel einen von außen zugänglichen Schalter am Zugsattelzapfen vorsehen zu müssen, vermieden werden.

Die Materialien des ersten und des zweiten Verschleißelements, beispielsweise aus Kunststoff, können entsprechend farbig sowie lichtdurchlässig ausgebildet sein, sodass die Materialien des ersten und des zweiten Verschleißelements radial von innen bzw. "von hinten" durchleuchtet werden können und das Licht in der Farbe des zuletzt durchleuchteten Verschleißelements nach außen austritt. Hierdurch kann der zuvor beschriebene Aspekt des zweifarbigen Verschleißdetektionsmittels in seiner Erkennbarkeit bzw. in seiner Aussagefähigkeit für die Person bzw. für den Kraftfahrer weiter verbessert werden, da die Farbe aufgrund des Leuchtens optisch besser wahrgenommen werden kann. Dies kann es der Person bzw. dem Kraftfahrer insbesondere bei Dunkelheit, bei schlechten Sichtverhältnissen und bzw. oder bei verschmutzter Oberfläche des Zugsattelzapfens erleichtern bzw. ermöglichen, das Verschleißdetektionsmittel an sich und insbesondere dessen Farbe optisch zu erkennen.

Hierbei den Zugsattelzapfen mit einem Vertikalhohlraum zu versehen kann ausreichend Bauraum innerhalb des Zugsattelzapfens schaffen, um das wenigstens eine Leuchtmittel und insbesondere mehrere Leuchtmittel dort anzuordnen. Insbesondere kann durch einen, entsprechend kleinen, Vertikalhohlraum eine Schwächung des Zugsattelzapfens ausreichend vermieden werden, sodass der Zugsattelzapfen seine kraftübertragende Funktion ohne Einschränkung ausüben kann.

Gemäß einem weiteren Aspekt der Erfindung weist das Verschleißdetektionsmittel, vorzugsweise innerhalb eines Vertikalhohlraums, wenigstens einen elektrischen Energiespeicher auf, welcher ausgebildet ist, wenigstens das Leuchtmittel, vorzugsweise ferner eine Detektionseinheit und bzw. oder eine drahtlose Kommunikationseinheit, elektrisch zu versorgen. Hierdurch kann eine elektrische Energieversorgung des Leuchtmittels und gegebenenfalls mehrerer bzw. aller Leuchtmittel direkt seitens des Zugsattelzapfens selbst erfolgen, sodass auf eine elektrisch leitfähige Verbindung zur elektrischen Energieversorgung von außerhalb des Zugsattelzapfens verzichtet werden kann. Dies kann den Aufwand der Verwendung wenigstens eines Leuchtmittels wie zuvor beschrieben entsprechend geringhalten. Insbesondere bei der Verwendung von LEDs als Leuchtmittel, welche üblicherweise einen sehr geringen elektrischen Energiebedarf aufweisen, kann ein dauerhafter bzw. durchgängiger Betrieb des Leuchtmittels durch den elektrischen Energiespeicher auch über Jahre gewährleistet sein, sodass auf ein Wiederaufladen oder auf ein Austauschen des elektrischen Energiespeichers verzichtet werden kann. Ggfs. können weitere elektrische bzw. elektronische Komponenten des Verschleißdetektionsmittels ebenfalls von dem elektrischen Energiespeicher elektrisch versorgt werden, so dass auf die Verwendung weiterer bzw. separater elektrischer Energiespeicher verzichtet werden kann.

Gemäß einem weiteren Aspekt der Erfindung ist das Verschleißdetektionsmittel in wenigstens einem Horizontalhohlraum des Zugsattelzapfens angeordnet, wobei das Verschleißdetektionsmittel wenigstens ein erstes Verschleißelement, welches zwischen dem äußeren Rand des Horizontalhohlraums und einer Verschleißgrenze angeordnet ist, und wenigstens ein zweites Verschleißelement aufweist, welches innerhalb der Verschleißgrenze angeordnet ist, wobei an der Verschleißgrenze wenigstens ein elektrisch leitfähiges Element eines elektrischen Kreises derart angeordnet ist, sodass das elektrisch leitfähige Element durch den Verschleiß des Zugsattelzapfens durchtrennt wird, wenn der Verschleiß die Verschleißgrenze erreicht, wobei das Verschleißdetektionsmittel, vorzugsweise innerhalb eines Vertikalhohlraums, eine Detektionseinheit aufweist, welche ausgebildet ist, die elektrische Leitfähigkeit des elektrisch leitfähigen Elements zu überwachen und, vorzugsweise beim Durchtrennen des elektrisch leitfähigen Elements, eine entsprechende Information auszugeben. Die beiden Verschleißelemente können die zuvor beschriebenen beiden einfarbigen ersten und zweiten Verschleißelemente oder auch zwei Verschleißelemente beliebiger gleicher Farbe sein.

Diesem Aspekt der Erfindung liegt die Erkenntnis zugrunde, dass zusätzlich oder alternativ zu den zuvor beschriebenen optischen Möglichkeiten der Verschleißüberwachung durch die Person bzw. durch den Kraftfahrer auch eine sensorische Möglichkeit der Überwachung geschaffen werden kann. Hierzu kann ein elektrisch leitfähiges Element wie zum Beispiel ein elektrischer Leiter bzw. eine elektrische Leiterschleife derart genau bis an die Verschleißgrenze eines zulässigen Verschleißes des Zugsattelzapfens an dieser Stelle geführt werden, was insbesondere innerhalb des zweiten Verschleißelements als beispielsweise Kunststoffteil erfolgen kann, welches gleichzeitig durch das erste Verschleißelement als beispielsweise Kunststoffteil nach außen hin abgedeckt bzw. geschützt sein kann.

In diesem Fall wird das erste, äußere Verschleißelement zusammen mit dem Zugsattelzapfen abgerieben bzw. verschlissen, bis die Verschleißgrenze erreicht ist. Bei Erreichen der Verschleißgrenze unterliegt auch das elektrisch leitfähige Element dem Abrieb bzw. dem Verschleiß, welcher von außen auf den Zugsattelzapfen wirkt. Dabei wird das elektrisch leitfähige Element derart abgerieben, sodass es durchtrennt wird, sodass das elektrisch leitfähige Element keinen elektrischen Strom mehr übertragen bzw. keine elektrische Spannung mehr über das elektrische leitfähige Element anliegen kann, was von der Detektionseinheit erkannt werden kann. Somit kann seitens der Detektionseinheit selbsttätig auf das Erreichen der Verschleißgrenze geschlossen werden.

Eine entsprechende Information kann von der Detektionseinheit nach außen ausgegeben werden. Werden mehrere Verschleißdetektionsmittel verwendet, so kann die Information der Detektionseinheit auch eine Information enthalten, welche die Identifikation des jeweiligen verschlissenen bzw. durchtrennten elektrisch leitfähigen Elements bzw. dessen Detektionseinheit enthält, sodass der Ort des erreichten bzw. überschrittenen zulässigen Verschleißes erkannt werden kann.

In jedem Fall kann die Ausgabe einer entsprechenden Information mittels einer drahtlosen Kommunikationseinheit erfolgen, welche wenigstens Daten bzw. Informationen nach außerhalb des Zugsattelzapfens drahtlos aussenden und vorzugsweise ferner Daten und Informationen von außerhalb empfangen kann. Dies kann seitens der Detektionseinheit selbsttätig unmittelbar dann erfolgen, wenn die Verschleißgrenze erreicht ist, sodass von der Person bzw. vom Kraftfahrer hierauf sofort reagiert werden kann. Diese Information kann von der Detektionseinheit fortlaufend bzw. sich regelmäßig wiederholend ausgegeben werden, um sicherzustellen, dass diese Information die Person bzw. den Kraftfahrer erreicht. Die Ausgabe diese Information seitens der Detektionseinheit kann gegebenenfalls durch eine Eingangsbestätigung seitens der Person bzw. des Kraftfahrers beendet werden, um elektrische Energie seitens der Detektionseinheit zu sparen. Die Ausgabe diese Information seitens der Detektionseinheit kann gegebenenfalls zusätzlich oder alternativ erst bei einer Abfrage bzw. in Reaktion auf eine Aufforderung von außerhalb erfolgen, wie weiter unten noch näher beschrieben werden wird.

In jedem Fall kann die Ausgabe dieser Information seitens der Detektionseinheit derart an die Person bzw. an den Kraftfahrer erfolgen, dass diese Information drahtlos an ein elektronisches Empfangsgerät wie zum Beispiel an ein mobiles Endgerät zum Beispiel in Form eines Smartphones, eines Tablets oder dergleichen der Person bzw. des Kraftfahrers ausgesendet wird. Zusätzlich oder alternativ kann diese Information seitens der Detektionseinheit auch drahtlos an ein elektronisches Empfangsgerät der Sattelzugmaschine ausgesendet, dort empfangen sowie weiterverarbeitet und dem Kraftfahrer über ein Ausgabeelement wie insbesondere ein Anzeigeelement der Sattelzugmaschine ausgegeben bzw. angezeigt werden. Diese Information kann in diesem Fall gegebenenfalls von der Sattelzugmaschine bzw. dessen Steuerungseinheit drahtlos an ein Flottenmanagementsystem weitergeleitet werden, um dort den Austausch des verschlissenen Zugsattelzapfens berücksichtigen und planen zu können.

Gemäß einem weiteren Aspekt der Erfindung weist das Verschleißdetektionsmittel, vorzugsweise innerhalb eines Vertikalhohlraums, wenigstens eine drahtlose Kommunikationseinheit, vorzugsweise eine drahtlose Sendeeinheit, auf, welche ausgebildet ist, wenigstens eine Information der Detektionseinheit drahtlos nach außerhalb des Zugsattelzapfens auszusenden. Hierdurch können die entsprechenden zuvor bereits beschriebenen Eigenschaften umgesetzt werden.

Gemäß einem weiteren Aspekt der Erfindung ist die drahtlose Kommunikationseinheit ausgebildet, von außerhalb des Zugsattelzapfens drahtlos zum Aussenden einer Information der Detektionseinheit aufgefordert zu werden. Hierdurch können die entsprechenden zuvor bereits beschriebenen Eigenschaften umgesetzt werden.

Gemäß einem weiteren Aspekt der Erfindung enthält die drahtlos ausgesendete Information der Detektionseinheit den Zustand des elektrisch leitfähigen Elements und bzw. oder eine aus dem Zustand des elektrisch leitfähigen Elements abgeleitete Information. Der Zustand des elektrisch leitfähigen Elements kann wenigstens dahingehend unterschieden werden, ob das elektrisch leitfähige Element durchtrennt ist oder nicht. Eine hieraus abgeleitete Information seitens der Detektionseinheit kann sein, dass die entsprechende Verschleißgrenze als erreicht oder noch nicht erreicht erkannt wird. Letztere Schlussfolgerung kann jedoch auch dort erfolgen, wo die drahtlos ausgesendete Information der Detektionseinheit empfangen und weiterverarbeitet wird, was die Umsetzung der Detektionseinheit vereinfachen und damit dort elektrische Energie, Kosten und bzw. oder Bauraum sparen kann.

Gemäß einem weiteren Aspekt der Erfindung weist der Zugsattelzapfen entlang seiner Längsachse in diese Reihenfolge auf:
- einen Montageteller, welcher ausgebildet ist, mit dem Sattelauflieger verbunden zu werden,
- einen Übergangsabschnitt, welcher sich dem Montageteller anschließt,
- einen Einschnürungsabschnitt, welcher sich dem Übergangsabschnitt anschließt und welcher zur formschlüssigen Verbindung mit einer Sattelkupplung einer Sattelzugmaschine des Sattelkraftfahrzeugs ausgebildet ist, und
- einen Abschlussbund , welcher sich dem Einschnürungsabschnitt anschließt und welcher den Zugsattelzapfen nach unten hin abschließt,
wobei das Verschleißdetektionsmittel, vorzugsweise wenigstens ein erstes Verschleißelement und ein zweites Verschleißelement, wenigstens ein Mal im Übergangsabschnitt, im Einschnürungsabschnitt und bzw. oder im Abschlussbund angeordnet ist. Entsprechend kann eine Überwachung auf Verschleiß wie zuvor beschrieben an den entsprechenden Stellen dieser Abschnitte des Zugsattelzapfens erfolgen.

Gemäß einem weiteren Aspekt der Erfindung ist das Verschleißdetektionsmittel, vorzugsweise wenigstens ein erstes Verschleißelement und ein zweites Verschleißelement, wenigstens zwei Mal, vorzugsweise einander diametral zur Längsachse gegenüberliegend, im Übergangsabschnitt, im Einschnürungsabschnitt und bzw. oder im Abschlussbund angeordnet. Dies kann die Anzahl der Stellen innerhalb des entsprechenden Abschnitts des Zugsattelzapfens erhöhen, welche wie zuvor beschrieben auf Verschleiß überwacht werden können. Hierbei die beiden Verschleißdetektionsmittel einander diametral zur Längsachse gegenüberliegend, d. h. in der Ebene des Querschnitts um 180° zueinander versetzt, anzuordnen, kann es ermöglichen, den Verschleiß möglichst gleichmäßig verteilt überwachen zu können.

Gemäß einem weiteren Aspekt der Erfindung ist das Verschleißdetektionsmittel, vorzugsweise wenigstens ein erstes Verschleißelement und ein zweites Verschleißelement, wenigstens zwei Mal paarweise, vorzugsweise als Paar einander diametral zur Längsachse gegenüberliegend und besonders vorzugsweise paarweise rechtwinkelig zueinander versetzt, im Übergangsabschnitt, im Einschnürungsabschnitt und bzw. oder im Abschlussbund angeordnet. Somit können die insgesamt vier Verschleißelemente in einer Ebene des Querschnitts, insbesondere um 90° zueinander versetzt, angeordnet werden. Hierdurch kann die Gleichmäßigkeit der Überwachung des Zugsattelzapfens auf Verschleiß weiter erhöht werden.

Gemäß einem weiteren Aspekt der Erfindung ist die Detektionseinheit ausgebildet, die elektrische Leitfähigkeit aller elektrisch leitfähigen Elements zu überwachen und, vorzugsweise beim Durchtrennen wenigstens eines der elektrisch leitfähigen Elemente, eine entsprechende Information auszugeben. Hierdurch kann der Aufwand, mehrere Detektionseinheiten zu verwenden, vermieden werden, wobei gleichzeitig die eine Detektionseinheit entsprechend ausgebildet ist, alle elektrisch leitfähigen Elemente überwachen zu können. Dies kann gleichzeitig den elektrischen Energieverbrauch und bzw. oder den erforderlichen Bauraum reduzieren.

Gemäß einem weiteren Aspekt der Erfindung enthält die drahtlos ausgesendete Information der Detektionseinheit ferner eine Identifikation des durchtrennten elektrisch leitfähigen Elements. Dies kann die Unterscheidung der einzelnen elektrisch leitfähigen Elemente auch bei Verwendung einer einzigen Detektionseinheit ermöglichen.

Die Erfindung betrifft auch einen Sattelauflieger mit einem Zugsattelzapfen wie zuvor beschrieben. Hierdurch können die zuvor beschriebenen Aspekte eines erfindungsgemäßen Zugsattelzapfens bei einem Sattelauflieger umgesetzt und dort genutzt werden.

Die Erfindung betrifft ferner ein Sattelkraftfahrzeug mit einem Sattelauflieger wie zuvor beschrieben. Hierdurch kann ein Sattelkraftfahrzeug geschaffen werden, um dort die zuvor beschriebenen Aspekte eines erfindungsgemäßen Zugsattelzapfens bei dessen Sattelauflieger umzusetzen und zu nutzen.

Mehrere Ausführungsbeispiele und weitere Vorteile der Erfindung werden nachstehend im Zusammenhang mit den folgenden Figuren rein schematisch dargestellt und näher erläutert. Darin zeigt:
- Figur 1: eine schematische seitliche Darstellung, teilweise im Schnitt, eines erfindungsgemäßen Zugsattelzapfens gemäß eines ersten Ausführungsbeispiels;
- Figur 2: eine schematische seitliche Darstellung, teilweise im Schnitt, eines erfindungsgemäßen Zugsattelzapfens gemäß eines zweiten Ausführungsbeispiels;
- Figur 3: eine schematische seitliche Darstellung, teilweise im Schnitt, eines erfindungsgemäßen Zugsattelzapfens gemäß eines dritten Ausführungsbeispiels; und
- Figur 4: einen Querschnitt durch den Übergangsabschnitt des Zugsattelzapfens gemäß des ersten Ausführungsbeispiels der Figur 1.

Die o.g. Figuren werden in zylindrischen Koordinaten betrachtet. Es erstreckt sich eine Längsachse X. Senkrecht zur Längsachse X erstreckt sich eine radiale Richtung R von der Längsachse X weg. Senkrecht zur radialen Richtung R und um die Längsachse X herum erstreckt sich eine Umfangsrichtung U.

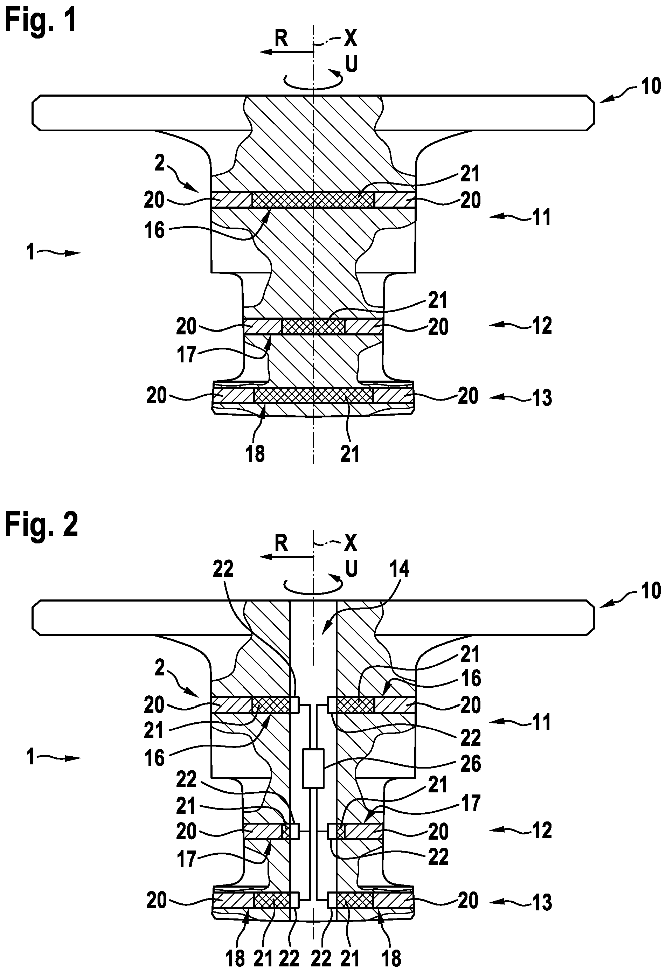

Figur 1 zeigt eine schematische seitliche Darstellung, teilweise im Schnitt, eines erfindungsgemäßen Zugsattelzapfens 1 gemäß eines ersten Ausführungsbeispiels. Der Zugsattelzapfen 1 kann auch als Königszapfen 1 oder als Königsbolzen 1 bezeichnet werden. Der Zugsattelzapfen 1 bzw. dessen Körper ist metallisch einstückig, d. h. integral, sowie an sich rotationsymmetrisch zur Längsachse X ausgebildet.

Entlang der Längsachse X von oben nach unten weist der Zugsattelzapfen 1 einen Montageteller 10, ein Übergangsabschnitt 11, einen Einschnürungsabschnitt 12 sowie einen Abschlussbund 13 auf. Der Montageteller 10 erstreckt sich in der radialen Richtung R deutlich über die übrigen Abschnitte hinaus und ist randseitig vergleichsweise flach entlang der Längsachse X ausgebildet. Dort weist der Montageteller 10 entlang der Längsachse X mehrere Durchgangsöffnungen (nicht dargestellt) auf, durch welche hindurch der Montageteller 10 an der Unterseite eines Fahrgestells (nicht dargestellt) eines Sattelaufliegers (nicht dargestellt) feststehend befestigt werden kann. Der Montageteller 10 geht stufenlos in den Übergangsabschnitt 11 über, welcher sich vergleichsweise weit entlang der Längsachse X erstreckt und in der radialen Richtung R deutlich geringer als der Montagesteller 10 ausgebildet ist. Der Einschnürungsabschnitt 12 schließt sich dem Übergangsabschnitt 11 stufenlos an und weist eine noch geringere Erstreckung in der radialen Richtung R auf. Der Einschnürungsabschnitt 12 geht stufenlos in den Abschlussbund 13 über, welcher in der radialen Richtung R etwa dem Übergangsabschnitt 11 entspricht und den Zugsattelzapfen 1 entlang der Längsachse X nach unten hin abschließt.

Der Einschnürungsabschnitt 12 wird im angekoppelten Zustand des Sattelaufliegers an einer Sattelzugmaschine (nicht dargestellt) von dessen Sattelkupplung aufgenommen und in der Umfangsrichtung U vollständig umschlossen. Hierdurch kann es im Betrieb des Sattelkraftfahrzeugs mit Sattelauflieger und Sattelzugmaschine zu einem Abrieb bzw. zu einem Verschleiß der zylindrischen Außenfläche des Zugsattelzapfens 1 und insbesondere dessen Einschnürungsabschnitts 12 kommen, welcher im Laufe der Zeit den Querschnitt bzw. die Materialstärke des Zugsattelzapfens 1 derart schwächen kann, dass eine sichere Kraftübertragung zwischen Sattelauflieger und Sattelzugmaschine über den Zugsattelzapfen 1 nicht mehr gewährleistet werden kann.

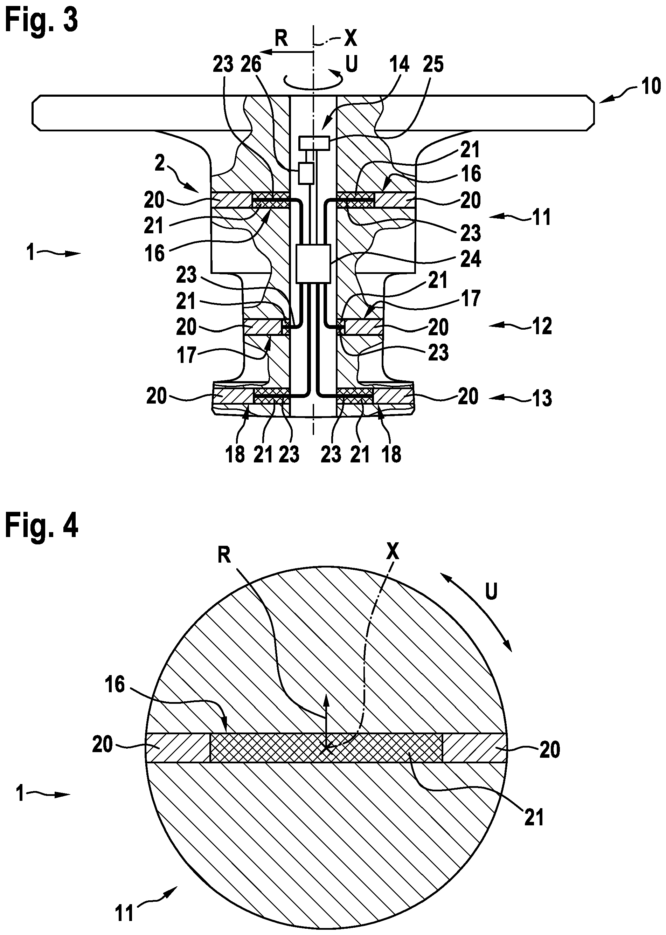

Erfindungsgemäß kann der Verschleiß des Zugsattelzapfens 1 im Bereich des Übergangsabschnitts 11, des Einschnürungsabschnitts 12 und des Abschlussbundes 13 gemäß des ersten Ausführungsbeispiels der Figuren 1 und 4 von einer Person wie zum Beispiel von dem Kraftfahrer des Sattelkraftfahrzeugs einfacher, schneller und bzw. oder häufiger als bisher bekannt dadurch kontrolliert bzw. überwacht werden, indem im Übergangsabschnitt 11, im Einschnürungsabschnitt 12 und im Abschlussbund 13 jeweils ein durchgängiger Horizontalhohlraum 16, 17, 18 vorhanden ist, welcher sich von der einen Seite der jeweiligen zylindrischen Außenfläche radial über die Längsachse X hinweg bis zur gegenüberliegenden Seite der Außenfläche erstreckt. In jedem Horizontalhohlraum 16, 17, 18 ist ein Verschleißdetektionsmittel 2 eingebracht, welches dort stoffschlüssig, beispielsweise durch ein Klebemittel zwischen der Innenfläche des Horizontalhohlraums 16, 17, 18 und der Außenfläche des Verschleißdetektionsmittels 2, oder kraftschlüssig, beispielsweise durch ein zumindest geringes Übermaß der Außenkontur des Verschleißdetektionsmittels 2 gegenüber dem Horizontalhohlraum 16, 17, 18, gehalten wird.

Jedes Verschleißdetektionsmittel 2 weist randseitig jeweils ein erstes, äußeres farbliches Verschleißelement 20 auf, zwischen denen ein zweites, inneres farbliches Verschleißelement 21 angeordnet ist. Die beiden ersten, äußeren farblichen Verschleißelemente 20 sind stoffschlüssig, zum Beispiel durch Kleben oder durch eine einstückige, d. h. integrale, Herstellung, mit dem dazwischenliegenden zweiten, inneren farblichen Verschleißelement 21 verbunden. Die beiden ersten, äußeren farblichen Verschleißelemente 20 weisen eine andere Farbe als das zweite, innere farbliche Verschleißelement 21 auf. Vorzugsweise sind die beiden ersten, äußeren farblichen Verschleißelemente 20 grün, insbesondere neongrün, und das zweite, innere farbliche Verschleißelement 21 rot, insbesondere neonrot, ausgebildet. Der Übergang bzw. die Grenze zwischen einem ersten, äußeren farblichen Verschleißelement 20 und dem entsprechenden zweiten, inneren farblichen Verschleißelement 21 ist durch die Dimensionierung der Verschleißelemente 20, 21 derart vorgesehen, dass dieser Übergang der zulässigen Verschleißgrenze des entsprechenden Abschnitts 11, 12, 13 des Zugsattelzapfens 1 entspricht.

Ist der Sattelauflieger nur auf seinen Sattelstützen stehend, d.h. ohne Sattelzugmaschine, abgestellt, so ist der erfindungsgemäße Zugsattelzapfen 1 von nahezu allen Seiten in der horizontalen Ebene zugänglich und kann insbesondere von der Person wie zum Beispiel von dem Kraftfahrer, welcher den Sattelauflieger mit seiner Sattelzugmaschine verbinden möchte, von nahezu allen Seiten optisch betrachtet werden. Hierbei kann die Person die Verschleißdetektionsmittel 2 des Übergangsabschnitts 11, des Einschnürungsabschnitts 12 und des Abschlussbundes 13 jeweils von beiden Seiten mit dem Auge erkennen und feststellen, ob jeweils das erste, äußere farbliche Verschleißelement 20 oder das zweite, innere Verschleißelement 21 nach außen sichtbar ist.

Erkennt die Person das erste, äußere farbliche Verschleißelement 20, so kann hieraus geschlussfolgert werden, dass an dieser Stelle des entsprechenden Abschnitts 11, 12, 13 des Zugsattelzapfens 1 der Verschleiß des Materials des Zugsattelzapfens 1, welcher entsprechend auch das jeweilige Verschleißdetektionsmittel 1 in seiner radialen Erstreckung reduziert, noch in einem zulässigen Maß liegt. Erkennt die Person das zweite, innere farbliche Verschleißelement 21, so kann hieraus geschlussfolgert werden, dass an dieser Stelle des entsprechenden Abschnitts 11, 12, 13 des Zugsattelzapfens 1 das erste, äußere farbliche Verschleißelement 20 vollständig abgerieben und daher das radial darunterliegende zweite, innere farbliche Verschleißelement 21 von außen sichtbar ist. Dies bedeutet, dass an dieser Stelle des entsprechenden Abschnitts 11, 12, 13 des Zugsattelzapfens 1 der zulässige Verschleiß bereits erreicht bzw. überschritten ist und der Sattelauflieger nicht mehr verkehrssicher verwendet werden kann. Vielmehr ist der Zugsattelzapfen 1 auszutauschen.

Figur 2 zeigt eine schematische seitliche Darstellung, teilweise im Schnitt, eines erfindungsgemäßen Zugsattelzapfens 1 gemäß eines zweiten Ausführungsbeispiels. In diesem Fall ist ferner ein Vertikalhohlraum 14 in Form einer Kernbohrung 14 entlang der Längsachse X vorgesehen, in welchem die zuvor beschriebenen Horizontalhohlräume 16, 17, 18 radial münden. Entsprechend ist in jedem Horizontalhohlraum 16, 17, 18 ein zweites, inneres farbliches Verschleißelement 21 wie zuvor beschrieben angeordnet, welches sich nach radial außen bis zum jeweiligen ersten, äußeren farblichen Verschleißelement 20 erstreckt und radial innenseitig bis zum Ende der jeweiligen Horizontalhohlraum 16, 17, 18 reicht. Die Verschleißelemente 20, 21 sind wie zuvor beschrieben farblich unterschiedlich ausgebildet, wobei das jeweilige Material ferner jeweils lichtdurchlässig ausgebildet ist.

An den radial inneren Enden der zweiten, inneren farblichen Verschleißelemente 21 ist jeweils ein Leuchtmittel 22 in Form einer LED 22 derart radial nach außen gerichtet angeordnet, sodass die Verschleißelemente 20, 21 vom Licht der jeweiligen LED 22 radial nach außen durchleuchtet werden, wenn die LED 22 betrieben wird. Die Speisung der LEDs 22 mit elektrischer Energie für einen durchgängigen bzw. dauerhaften Betrieb kann seitens eines elektrischen Energiespeichers 26 in Form einer Batterie 26 erfolgen, welche ebenfalls innerhalb des Vertikalhohlraums 14 angeordnet ist. Der Betrieb der LEDs 22 kann bei Montage des Zugsattelzapfens 1 am Sattelauflieger gestartet werden und anhalten, bis die elektrische Energie der Batterie 26 verbraucht ist.

Auch in diesem Fall des zweiten Ausführungsbeispiels der Figur 2 können die entsprechenden Stellen der Abschnitte 11, 12, 13 des Zugsattelzapfens 1 von einer Person wie zuvor hinsichtlich des ersten Ausführungsbeispiels der Figuren 1 und 4 beschrieben optisch auf Verschleiß kontrolliert werden. Hierbei kann von der Person jeweils ein Licht in der Farbe des ersten, äußeren farblichen Verschleißelements 20 optisch wahrgenommen werden, solange, wie zuvor beschrieben, die Verschleißgrenze eingehalten wird. Ist an einer Stelle der Abschnitte 11, 12, 13 des Zugsattelzapfens 1 die Verschleißgrenze erreicht bzw. überschritten, so ist das erste, äußere farbliche Verschleißelement 20 an dieser Stelle abgerieben und das Licht der entsprechenden LED 22 tritt nach außen in der Farbe des zweiten, inneren farblichen Verschleißelements 21 aus.

Entsprechend kann von der Person eine Unterscheidung zwischen einem zulässigen oder unzulässigen Verschleiß aufgrund der Farbe des Lichts erfolgen, welches an der jeweiligen Stelle optisch wahrgenommen werden kann. Hierdurch kann die erfindungsgemäße Verschleißkontrolle des Zugsattelzapfens 1 gemäß des ersten Ausführungsbeispiels der Figuren 1 und 4 für die Person dahingehend verbessert werden, dass die farblich leuchtenden Verschleißdetektionsmittel 2, insbesondere bei Dunkelheit bzw. bei schlechten Sichtverhältnissen zum Beispiel bei Regen oder bei Nebel oder auch bei Verschmutzung der Außenfläche des Zugsattelzapfens 1, besser bzw. verlässlicher wahrgenommen werden können als ohne diese Hinterleuchtung. Insbesondere kann die Person bei Dunkelheit bzw. bei schlechten Sichtverhältnissen darauf verzichten, den Zugsattelzapfen 1 zum Beispiel mit einer Taschenlampe anzuleuchten, um die Verschleißdetektionsmittel 2 optisch erkennen zu können. Ebenso kann der Aufwand entfallen, eine verschmutzte Oberfläche des Zugsattelzapfens 1 reinigen bzw. abwischen zu müssen, um die Verschleißdetektionsmittel 2 optisch erkennen zu können.

Figur 3 zeigt eine schematische seitliche Darstellung, teilweise im Schnitt, eines erfindungsgemäßen Zugsattelzapfens 1 gemäß eines dritten Ausführungsbeispiels. In diesem Fall ist der Zugsattelzapfen 1 wie im zweiten Ausführungsbeispiel der Figur 2 beschrieben ausgebildet, was auch für die Erstreckung der Verschleißelemente 20, 21 gilt, welche farblich wie im ersten Ausführungsbeispiel der Figuren 1 und 4 beschrieben oder auch mit der gleichen, unbestimmten Farbe ausgebildet sein können.

In jedem Fall erstreckt sich jeweils ein elektrisch leitfähiges Element 23 in Form einer Leiterschleife 23 derart durch das jeweilige zweite, innere Verschleißelement 21 hindurch, dass die Leiterschleifen 23 an der Grenze zwischen dem ersten, äußeren Verschleißelement 20 und dem zweiten, inneren Verschleißelement 21 verläuft bzw. umkehrt. Alle Leiterschleifen 23 sind elektrisch leitfähig mit einer Detektionseinheit 24 verbunden, welche innerhalb des Vertikalhohlraums 14 angeordnet ist und auch als Steuerungseinheit 24 bezeichnet werden kann. Die Detektionseinheit 24 ist signalübertragend mit einer drahtlosen Kommunikationseinheit 25 verbunden, welche ebenfalls innerhalb des Vertikalhohlraums 14 angeordnet ist und zumindest drahtlose Signale aussenden kann, weshalb die drahtlose Kommunikationseinheit 25 auch als Sendeeinheit 25 bezeichnet werden kann. Sowohl die Detektionseinheit 24 als auch die Sendeeinheit 25 sind elektrisch leitfähig mit der Batterie 26 verbunden und werden durch elektrische Energie der Batterie 26 betrieben.

Erreicht in diesem Fall der Verschleiß des Zugsattelzapfens 1 an einer Stelle der Abschnitte 11, 12, 13 die Verschleißgrenze, so wird hierdurch die entsprechende Leiterschleifen 23 abgerieben und durchtrennt. Seitens der Detektionseinheit 24 kann für jede der Leiterschleifen 23 festgestellt werden, ob die Leiterschleifen 23 durchgängig elektrisch leitfähig geschlossen oder durchtrennt ist. Dies kann beispielsweise durch das Anlegen einer Meßspannung seitens der Detektionseinheit 24 erfolgen. Hierdurch kann seitens der Detektionseinheit 24 für die Stellen der Abschnitte 11, 12, 13 des Zugsattelzapfens 1, an welchen die Leiterschleifen 23 vorgesehen sind, unterschieden werden, ob dort der Verschleiß ein noch zulässiges Maß aufweist oder nicht. Eine entsprechende Information kann von der Detektionseinheit 24 mittels der Sendeeinheit 25 nach außerhalb des Zugsattelzapfens 1 drahtlos ausgesendet werden.

Diese Information kann beispielsweise von einem Handgerät wie zum Beispiel von einem mobilen Endgerät wie zum Beispiel von einem Smartphone einer Person bzw. des Kraftfahrers des Sattelkraftfahrzeugs empfangen und dort angezeigt werden. Das Aussenden dieser Information kann durchgängig erfolgen, was jedoch den Verbrauch elektrischer Energie erhöhen kann. Das Aussenden dieser Information kann auch erst dann erfolgen, wenn die Person bzw. der Kraftfahrer den erfindungsgemäßen Zugsattelzapfens 1 durch eine entsprechende Information hierzu auffordert, was ebenfalls seitens des Smartphones erfolgen kann. Hierdurch kann die entsprechende Information bei Bedarf abgefragt werden, was elektrischen Energieverbrauch des erfindungsgemäßen Zugsattelzapfens 1 reduzieren und damit die Betriebsdauer der Detektionseinheit 24 sowie der Sendeeinheit 25 erhöhen kann.

Diese Information kann beispielsweise auch von einer Steuerungseinheit der Sattelzugmaschine empfangen und dort dem Kraftfahrer angezeigt werden. Auch in diesem Fall kann das Aussenden der Informationen seitens des erfindungsgemäßen Zugsattelzapfens 1 durchgängig oder erst nach Aufforderung durch die Steuerungseinheit der Sattelzugmaschine erfolgen. In jedem Fall kann die erhaltene Information dem Kraftfahrer der Sattelzugmaschine angezeigt werden, um insbesondere während des Betriebs des Sattelkraftfahrzeugs über den verkehrssicheren Zustand des Zugsattelzapfens 1 informiert zu sein.

In jedem Fall kann seitens der Detektionseinheit 24 zwischen den verschiedenen Leiterschleifen 23 unterschieden werden, sodass in den nach außen ausgesendeten Informationen auch eine Identifikation der jeweiligen Leiterschleifen 23 enthalten sein kann. Erreicht somit eines der ersten, äußeren Verschleißelemente 20 seine Grenze und die entsprechende Leiterschleifen 23 wird durchtrennt, kann der Person bzw. dem Kraftfahrer konkret mitgeteilt werden, an welcher Stelle und an welchem Abschnitt 11, 12, 13 des Zugsattelzapfens 1 der zulässige Verschleiß erreicht bzw. unterschritten wird.

### BEZUGSZEICHENLISTE (Teil der Beschreibung)

- R: radiale Richtung
- U: Umfangsrichtung
- X: Längsachse

- 1: Zugsattelzapfen; Königszapfen; Königsbolzen
- 10: Montageteller
- 11: Übergangsabschnitt
- 12: Einschnürungsabschnitt
- 13: Abschlussbund
- 14: Vertikalhohlraum; Kernbohrung
- 16: Horizontalhohlräume des Übergangsabschnitts 11
- 17: Horizontalhohlräume des Einschnürungsabschnitts 12
- 18: Horizontalhohlräume des Abschlussbunds 13

- 2: Verschleißdetektionsmittel
- 20: erste, äußere (farbliche) Verschleißelemente
- 21: zweite, innere (farbliche) Verschleißelemente
- 22: Leuchtmittel; LEDs
- 23: elektrisch leitfähige Elemente; Leiterschleifen
- 24: Detektionseinheit; Steuerungseinheit
- 25: drahtlose Kommunikationseinheit bzw. drahtlose Sendeeinheit
- 26: elektrischer Energiespeicher; Batterie

## Patentansprüche

1. Zugsattelzapfen (1) für einen Sattelauflieger eines Sattelkraftfahrzeugs,
welcher sich im Wesentlichen entlang einer Längsachse (X) erstreckt,
**gekennzeichnet durch**
wenigstens ein Verschleißdetektionsmittel (2), welches senkrecht zur Längsachse (X) ausgerichtet derart im Zugsattelzapfen (1) angeordnet ist, sodass ein Verschleiß des Zugsattelzapfens (1) senkrecht zur Längsachse (X) optisch und/oder sensorisch erkannt werden kann.

2. Zugsattelzapfen (1) nach Anspruch 1, **dadurch gekennzeichnet, dass**
das Verschleißdetektionsmittel (2) in wenigstens einem Horizontalhohlraum (16, 17, 18) des Zugsattelzapfens (1) angeordnet ist,
wobei das Verschleißdetektionsmittel (2)
wenigstens ein erstes Verschleißelement (20) einer ersten Farbe, welches zwischen dem äußeren Rand des Horizontalhohlraums (16, 17, 18) und einer Verschleißgrenze angeordnet ist, und
wenigstens ein zweites Verschleißelement (21) einer zweiten, unterschiedlichen Farbe aufweist, welches innerhalb der Verschleißgrenze angeordnet ist.

3. Zugsattelzapfen (1) nach Anspruch 2, **dadurch gekennzeichnet, dass**
das Verschleißdetektionsmittel (2) wenigstens ein Leuchtmittel (22) aufweist, welches innerhalb des Horizontalhohlraums (16, 17, 18) und/oder innerhalb eines Vertikalhohlraums (14) des Zugsattelzapfens (1) angeordnet und ausgebildet ist, das erste Verschleißelement (20) durch das zweite Verschleißelement (21) hierdurch zu durchleuchten.

4. Zugsattelzapfen (1) nach Anspruch 3, **dadurch gekennzeichnet, dass**
das Verschleißdetektionsmittel (2), vorzugsweise innerhalb eines Vertikalhohlraums (14), wenigstens einen elektrischen Energiespeicher (26) aufweist, welcher ausgebildet ist, wenigstens das Leuchtmittel (22), vorzugsweise ferner eine Detektionseinheit (24) und/oder eine drahtlose Kommunikationseinheit (25), elektrisch zu versorgen.

5. Zugsattelzapfen (1) nach einem der vorangehenden Ansprüche, **dadurch gekennzeichnet, dass**
das Verschleißdetektionsmittel (2) in wenigstens einem Horizontalhohlraum (16, 17, 18) des Zugsattelzapfens (1) angeordnet ist,
wobei das Verschleißdetektionsmittel (2)
wenigstens ein erstes Verschleißelement (20), welches zwischen dem äußeren Rand des Horizontalhohlraums (16, 17, 18) und einer Verschleißgrenze angeordnet ist, und
wenigstens ein zweites Verschleißelement (21) aufweist, welches innerhalb der Verschleißgrenze angeordnet ist,
wobei an der Verschleißgrenze wenigstens ein elektrisch leitfähiges Element (23) eines elektrischen Kreises derart angeordnet ist, sodass das elektrisch leitfähige Element (23) durch den Verschleiß des Zugsattelzapfens (1) durchtrennt wird, wenn der Verschleiß die Verschleißgrenze erreicht,
wobei das Verschleißdetektionsmittel (2), vorzugsweise innerhalb eines Vertikalhohlraums (14), eine Detektionseinheit (24) aufweist, welche ausgebildet ist, die elektrische Leitfähigkeit des elektrisch leitfähigen Elements (23) zu überwachen und, vorzugsweise beim Durchtrennen des elektrisch leitfähigen Elements (23), eine entsprechende Information auszugeben.

6. Zugsattelzapfen (1) nach Anspruch 5, **dadurch gekennzeichnet, dass**
das Verschleißdetektionsmittel (2), vorzugsweise innerhalb eines Vertikalhohlraums (14), wenigstens eine drahtlose Kommunikationseinheit (25), vorzugsweise eine drahtlose Sendeeinheit (25), aufweist, welche ausgebildet ist, wenigstens eine Information der Detektionseinheit (24) drahtlos nach außerhalb des Zugsattelzapfens (1) auszusenden.

7. Zugsattelzapfen (1) nach Anspruch 6, **dadurch gekennzeichnet, dass**
die drahtlose Kommunikationseinheit (25) ausgebildet ist, von außerhalb des Zugsattelzapfens (1) drahtlos zum Aussenden einer Information der Detektionseinheit (24) aufgefordert zu werden.

8. Zugsattelzapfen (1) nach Anspruch 6 oder 7, **dadurch gekennzeichnet, dass**
die drahtlos ausgesendete Information der Detektionseinheit (24) den Zustand des elektrisch leitfähigen Elements (23) und/oder eine aus dem Zustand des elektrisch leitfähigen Elements (23) abgeleitete Information enthält.

9. Zugsattelzapfen (1) nach einem der vorangehenden Ansprüche, **dadurch gekennzeichnet, dass**
der Zugsattelzapfen (1) entlang seiner Längsachse (X) in diese Reihenfolge aufweist:
einen Montageteller (10), welcher ausgebildet ist, mit dem Sattelauflieger verbunden zu werden,
einen Übergangsabschnitt (11), welcher sich dem Montageteller (10) anschließt,
einen Einschnürungsabschnitt (12), welcher sich dem Übergangsabschnitt (11) anschließt und welcher zur formschlüssigen Verbindung mit einer Sattelkupplung einer Sattelzugmaschine des Sattelkraftfahrzeugs ausgebildet ist, und
einen Abschlussbund (13), welcher sich dem Einschnürungsabschnitt (12) anschließt und welcher den Zugsattelzapfen (1) nach unten hin abschließt,
wobei das Verschleißdetektionsmittel (2), vorzugsweise wenigstens ein erstes Verschleißelement (20) und ein zweites Verschleißelement (21), wenigstens ein Mal im Übergangsabschnitt (11), im Einschnürungsabschnitt (12) und/oder im Abschlussbund (13) angeordnet ist.

10. Zugsattelzapfen (1) nach Anspruch 9, **dadurch gekennzeichnet, dass**
wobei das Verschleißdetektionsmittel (2), vorzugsweise wenigstens ein erstes Verschleißelement (20) und ein zweites Verschleißelement (21), wenigstens zwei Mal, vorzugsweise einander diametral zur Längsachse (X) gegenüberliegend, im Übergangsabschnitt (11), im Einschnürungsabschnitt (12) und/oder im Abschlussbund (13) angeordnet ist.

11. Zugsattelzapfen (1) nach Anspruch 9 oder 10, **dadurch gekennzeichnet, dass**
wobei das Verschleißdetektionsmittel (2), vorzugsweise wenigstens ein erstes Verschleißelement (20) und ein zweites Verschleißelement (21), wenigstens zwei Mal paarweise, vorzugsweise als Paar einander diametral zur Längsachse (X) gegenüberliegend und besonders vorzugsweise paarweise rechtwinkelig zueinander versetzt, im Übergangsabschnitt (11), im Einschnürungsabschnitt (12) und/oder im Abschlussbund (13) angeordnet ist.

12. Zugsattelzapfen (1) nach einem der Ansprüche 5 bis 8 und nach einem der Ansprüche 10 oder 11, **dadurch gekennzeichnet, dass**
die Detektionseinheit (24) ausgebildet ist, die elektrische Leitfähigkeit aller elektrisch leitfähigen Elements (23) zu überwachen und, vorzugsweise beim Durchtrennen wenigstens eines der elektrisch leitfähigen Elemente (23), eine entsprechende Information auszugeben.

13. Zugsattelzapfen (1) nach Anspruch 12, **dadurch gekennzeichnet, dass**
die drahtlos ausgesendete Information der Detektionseinheit (24) ferner eine Identifikation des durchtrennten elektrisch leitfähigen Elements (23) enthält.

14. Sattelauflieger mit einem Zugsattelzapfen (1) nach einem der vorangehenden Ansprüche.

15. Sattelkraftfahrzeug mit einem Sattelauflieger nach Anspruch 14.

## Claims

1. Fifth-wheel kingpin (1) for a semitrailer of a tractor-trailer,
extending substantially along a longitudinal axis (X),
**characterized by**
at least one wear detection means (2) which is arranged perpendicular to the longitudinal axis (X) in the fifth-wheel kingpin (1) in such a way that wear to the fifth-wheel kingpin (1) perpendicular to the longitudinal axis (X) can be detected visually and/or by sensor.

2. Fifth-wheel kingpin (1) according to claim 1, **characterized in that**
the wear detection means (2) is arranged in at least one horizontal cavity (16, 17, 18) of the fifth-wheel kingpin (1),
the wear detection means (2)
having at least one first wear element (20) of a first color, which is arranged between the outer edge of the horizontal cavity (16, 17, 18) and a wear limit, and
having at least one second wear element (21) of a second, different color, which is arranged within the wear limit.

3. Fifth-wheel kingpin (1) according to claim 2, **characterized in that**
the wear detection means (2) has at least one lighting means (22) which is arranged and designed within the horizontal cavity (16, 17, 18) and/or within a vertical cavity (14) of the fifth-wheel kingpin (1) to illuminate the first wear element (20) through the second wear element (21).

4. Fifth-wheel kingpin (1) according to claim 3, **characterized in that**
the wear detection means (2), preferably within a vertical cavity (14), has at least one electrical energy storage device (26) which is designed to electrically supply at least the lighting means (22), preferably also a detection unit (24) and/or a wireless communication unit (25).

5. Fifth-wheel kingpin (1) according to any of the preceding claims, **characterized in that**
the wear detection means (2) is arranged in at least one horizontal cavity (16, 17, 18) of the fifth-wheel kingpin (1),
the wear detection means (2)
having at least one first wear element (20) which is arranged between the outer edge of the horizontal cavity (16, 17, 18) and a wear limit, and
having at least one second wear element (21) which is arranged within the wear limit,
at least one electrically conductive element (23) of an electrical circuit being arranged at the wear limit so that the electrically conductive element (23) is severed by the wear to the fifth-wheel kingpin (1) if the wear reaches the wear limit,
the wear detection means (2), preferably within a vertical cavity (14), having a detection unit (24) which is designed to monitor the electrical conductivity of the electrically conductive element (23) and, preferably when the electrically conductive element (23) is severed, to output corresponding information.

6. Fifth-wheel kingpin (1) according to claim 5, **characterized in that**
the wear detection means (2), preferably within a vertical cavity (14), has at least one wireless communication unit (25), preferably a wireless transmission unit (25), which is designed to wirelessly transmit at least one item of information from the detection unit (24) to the outside of the fifth-wheel kingpin (1).

7. Fifth-wheel kingpin (1) according to claim 6, **characterized in that**
the wireless communication unit (25) is designed to be requested from outside the fifth-wheel kingpin (1) to wirelessly transmit information from the detection unit (24).

8. Fifth-wheel kingpin (1) according to claim 6 or 7, **characterized in that**
the wirelessly transmitted information from the detection unit (24) contains the state of the electrically conductive element (23) and/or information derived from the state of the electrically conductive element (23).

9. Fifth-wheel kingpin (1) according to any of the preceding claims, **characterized in that**
the fifth-wheel kingpin (1) has along its longitudinal axis (X) in this order:
a mounting plate (10) which is designed to be connected to the semitrailer,
a transition portion (11) which adjoins the mounting plate (10),
a constriction portion (12) which adjoins the transition portion (11) and which is designed for positively connecting to a fifth-wheel coupling of a semitrailer tractor of the tractor-trailer, and
a closing collar (13) which adjoins the constriction portion (12) and which adjoins the fifth-wheel kingpin (1) at the bottom,
the wear detection means (2), preferably at least a first wear element (20) and a second wear element (21), being arranged at least once in the transition portion (11), in the constriction portion (12) and/or in the closing collar (13).

10. Fifth-wheel kingpin (1) according to claim 9, **characterized in that**
wherein the wear detection means (2), preferably at least a first wear element (20) and a second wear element (21), is arranged at least twice, preferably diametrically opposite one another to the longitudinal axis (X), in the transition portion (11), in the constriction portion (12) and/or in the closing collar (13).

11. Fifth-wheel kingpin (1) according to claim 9 or 10, **characterized in that**
wherein the wear detection means (2), preferably at least a first wear element (20) and a second wear element (21), is arranged at least twice in pairs, preferably as a pair diametrically opposite one another to the longitudinal axis (X) and particularly preferably offset in pairs at right angles to one another, in the transition portion (11), in the constriction portion (12) and/or in the closing collar (13).

12. Fifth-wheel kingpin (1) according to any of claims 5 to 8 and according to either of claims 10 or 11, **characterized in that**
the detection unit (24) is designed to monitor the electrical conductivity of all electrically conductive elements (23) and, preferably when at least one of the electrically conductive elements (23) is severed, to output corresponding information.

13. Fifth-wheel kingpin (1) according to claim 12, **characterized in that**
the wirelessly transmitted information from the detection unit (24) further contains an identification of the severed electrically conductive element (23).

14. Semitrailer having a fifth-wheel kingpin (1) according to any of the preceding claims.

15. Tractor-trailer having a semitrailer according to claim 14.

## Revendications

1. Pivot d'attelage (1) pour une semi-remorque d'un véhicule articulé,
lequel s'étend sensiblement le long d'un axe longitudinal (X),
**caractérisé par**
au moins un moyen de détection d'usure (2) qui est orienté perpendiculairement à l'axe longitudinal (X) et est disposé dans le pivot d'attelage (1) de telle sorte qu'une usure du pivot d'attelage (1) perpendiculairement à l'axe longitudinal (X) peut être détectée de manière optique et/ou par capteur.

2. Pivot d'attelage (1) selon la revendication 1, **caractérisé en ce que**
le moyen de détection d'usure (2) est disposé dans au moins une cavité horizontale (16, 17, 18) du pivot d'attelage (1),
dans lequel le moyen de détection d'usure (2) présente
au moins un premier élément d'usure (20) d'une première couleur et disposé entre le bord extérieur de la cavité horizontale (16, 17, 18) et une limite d'usure, et
au moins un second élément d'usure (21) d'une seconde couleur différente et disposé à l'intérieur de la limite d'usure.

3. Pivot d'attelage (1) selon la revendication 2, **caractérisé en ce que**
le moyen de détection d'usure (2) présente au moins un moyen d'éclairage (22) disposé à l'intérieur de la cavité horizontale (16, 17, 18) et/ou à l'intérieur d'une cavité verticale (14) du pivot d'attelage (1) et configuré pour éclairer le premier élément d'usure (20) à travers le second élément d'usure (21).

4. Pivot d'attelage (1) selon la revendication 3, **caractérisé en ce que**
le moyen de détection d'usure (2) présente, de préférence à l'intérieur d'une cavité verticale (14), au moins un accumulateur d'énergie électrique (26) configuré pour alimenter électriquement au moins le moyen d'éclairage (22), de préférence en outre une unité de détection (24) et/ou une unité de communication sans fil (25).

5. Pivot d'attelage (1) selon l'une des revendications précédentes, **caractérisé en ce que**
le moyen de détection d'usure (2) est disposé dans au moins une cavité horizontale (16, 17, 18) du pivot d'attelage (1),
dans lequel le moyen de détection d'usure (2) présente
au moins un premier élément d'usure (20) disposé entre le bord extérieur de la cavité horizontale (16, 17, 18) et une limite d'usure, et
au moins un second élément d'usure (21) disposé à l'intérieur de la limite d'usure,
dans lequel au moins un élément électriquement conducteur (23) d'un circuit électrique est disposé au niveau de la limite d'usure de telle sorte que l'élément électriquement conducteur (23) est sectionné par l'usure du pivot d'attelage (1) lorsque l'usure atteint la limite d'usure,
dans lequel le moyen de détection d'usure (2) présente, de préférence à l'intérieur d'une cavité verticale (14), une unité de détection (24) configurée pour surveiller la conductivité électrique de l'élément électriquement conducteur (23) et, de préférence lors du sectionnement de l'élément électriquement conducteur (23), pour distribuer une information correspondante.

6. Pivot d'attelage (1) selon la revendication 5, **caractérisé en ce que**
le moyen de détection d'usure (2) présente, de préférence à l'intérieur d'une cavité verticale (14), au moins une unité de communication sans fil (25), de préférence une unité d'émission sans fil (25), configurée pour émettre sans fil au moins une information de l'unité de détection (24) vers l'extérieur du pivot d'attelage (1).

7. Pivot d'attelage (1) selon la revendication 6, **caractérisé en ce que**
l'unité de communication sans fil (25) est configurée pour être invitée sans fil depuis l'extérieur du pivot d'attelage (1) à émettre une information de l'unité de détection (24).

8. Pivot d'attelage (1) selon la revendication 6 ou 7, **caractérisé en ce que**
l'information émise sans fil par l'unité de détection (24) contient l'état de l'élément électriquement conducteur (23) et/ou une information déduite de l'état de l'élément électriquement conducteur (23).

9. Pivot d'attelage (1) selon l'une des revendications précédentes, **caractérisé en ce que**
le pivot d'attelage (1) présente, le long de son axe longitudinal (X), dans cet ordre :
un plateau de montage (10) conçu pour être relié à la semi-remorque,
une section de transition (11) qui rejoint le plateau de montage (10),
une section de rétrécissement (12) qui rejoint la section de transition (11) et qui est conçue pour la liaison par complémentarité de forme à une sellette d'attelage d'une semi-remorque du véhicule articulé, et
un collet de fermeture (13) qui rejoint la section de rétrécissement (12) et qui ferme le pivot d'attelage (1) vers le bas,
dans lequel le moyen de détection d'usure (2), de préférence au moins un premier élément d'usure (20) et un second élément d'usure (21), est disposé au moins une fois dans la section de transition (11), dans la section de rétrécissement (12) et/ou dans le collet de fermeture (13).

10. Pivot d'attelage (1) selon la revendication 9, **caractérisé en ce que**
dans lequel le moyen de détection d'usure (2), de préférence au moins un premier élément d'usure (20) et un second élément d'usure (21), est disposé au moins deux fois, de préférence de manière diamétralement opposée l'une à l'autre par rapport à l'axe longitudinal (X), dans la section de transition (11), dans la section de rétrécissement (12) et/ou dans le collet de fermeture (13).

11. Pivot d'attelage (1) selon la revendication 9 ou 10, **caractérisé en ce que**
dans lequel le moyen de détection d'usure (2), de préférence au moins un premier élément d'usure (20) et un second élément d'usure (21), est disposé au moins deux fois par paire, de préférence en tant que paire de manière diamétralement opposée l'une à l'autre par rapport à l'axe longitudinal (X) et de manière particulièrement préférée de manière décalée par paire à un angle droit l'une par rapport à l'autre, dans la section de transition (11), dans la section de rétrécissement (12) et/ou dans le collet de fermeture (13).

12. Pivot d'attelage (1) selon l'une des revendications 5 à 8 et selon l'une des revendications 10 ou 11, **caractérisé en ce que**
l'unité de détection (24) est configurée pour surveiller la conductivité électrique de tous les éléments électriquement conducteurs (23) et, de préférence lors du sectionnement d'au moins un des éléments électriquement conducteurs (23), pour distribuer une information correspondante.

13. Pivot d'attelage (1) selon la revendication 12, **caractérisé en ce que**
l'information émise sans fil par l'unité de détection (24) contient en outre une identification de l'élément électriquement conducteur (23) sectionné.

14. Semi-remorque comportant un pivot d'attelage (1) selon l'une des revendications précédentes.

15. Véhicule articulé comportant une semi-remorque selon la revendication 14.
